# EUROPEAN PATENT SPECIFICATION

(11) **EP 2 437 886 B1**
(45) Date of publication and mention of the grant of the patent: **13.11.2019**
(21) Application number: 10724562.3
(22) Date of filing: 03.06.2010
(51) Int. Cl.: B01J 29/08, B01J 37/30, C08J 11/10, C10G 1/00

(54) **MODIFIED ZEOLITES AND THEIR USE IN THE RECYCLING OF PLASTICS WASTE**
MODIFIZIERTE ZEOLITHE UND IHRE VERWENDUNG FÜR DAS RECYCLING VON KUNSTSTOFFABFALL
ZÉOLITES MODIFIÉES ET LEUR UTILISATION DANS LE RECYCLAGE DE DÉCHETS PLASTIQUES

(30) Priority: 03.06.2009 GB 0909527
(43) Date of publication of application: 11.04.2012
(60) Divisional application: 19199176.9
(73) Proprietor: University of Manchester, Manchester M13 9PL (GB)
(72) Inventor: GARFORTH, Arthur, Stockport SK4 1NN (GB); HERNANDEZ-MARTINEZ, Jesus, NL-6221EH Maastricht (NL); AKAH, Aaron, Manchester M40 3LU (GB); COOKE, Michael, Widnes WA8 8XS (GB); CRESSWELL, David, Chester CH3 7AS (GB)
(74) Representative: HGF Limited
(86) International application number: PCT/GB2010/050932
(87) International publication number: WO 2010/139997

(56) References cited:
- WO-A1-2005/094990
- WO-A1-2007/068067
- US-A- 5 013 699
- GARFORTH ET AL: "Feedstock recycling of polymer wastes", CURRENT OPINION IN SOLID STATE AND MATERIALS SCIENCE, ELSEVIER SCIENCE LTD, OXFORD, GB, vol. 8, no. 6, 1 December 2004 (2004-12-01), pages 419-425, XP005151121, ISSN: 1359-0286, DOI: 10.1016/J.COSSMS.2005.04.003
- Weibing Ding ET AL: "Hydrocracking and Hydroisomerization of High-Density Polyethylene and Waste Plastic over Zeolite and Silica-Alumina-Supported Ni and Ni-Mo Sulfides", Energy & Fuels, vol. 11, no. 6, 1 November 1997 (1997-11-01), pages 1219-1224, XP055130933, ISSN: 0887-0624, DOI: 10.1021/ef970051q
- Nathan D. Hesse ET AL: "Polyethylene catalytic hydrocracking by PtHZSM-5, PtHY, and PtHMCM-41", Journal of Applied Polymer Science, vol. 92, no. 2, 15 April 2004 (2004-04-15) , pages 1293-1301, XP055130950, ISSN: 0021-8995, DOI: 10.1002/app.20083

## Description

The present invention relates to novel zeolite based catalysts used in methods of recycling plastics materials. The present invention also relates to methods of manufacturing such zeolite based catalysts.

Plastics waste is traditionally disposed of by land-fill, incineration or recycling by reprocessing the waste into raw material for reuse. Each of these disposal methods has its disadvantages. The drawbacks of land-fill are self apparent. Although incineration may include energy recovery, there still remains the obvious problem of CO₂ emission and the emission of other toxic pollutants. Additionally, the temperatures required for incineration are high, typically of the order of 400 to 1200°C.

Recycling the plastics requires sorting of the plastics waste because certain types of plastics materials are not recyclable, and mixtures of plastics can be problematic. For example, when different types of plastics are melted together they tend to phase-separate and set into layers. These phase boundaries can cause structural weakness in the resulting material and therefore limit the applications of the resulting material.

Thus there is a need for an improved method for the recycling of waste plastics. Alternative solutions are catalytic hydrocracking and catalytic and non-catalytic pyrolysis.

The use of zeolite based catalysts in the hydrocracking and pyrolysis of gasoline feed stocks into gasoline is known in the petrochemical industry. Furthermore, the use of zeolite based catalysts in the recycling of waste plastics into desirable fuels such as gasoline, diesel fuel and liquefied petroleum gas (LPG) has been considered as a possible recycling method; thermal and catalytic cracking have both been considered. Hydrocracking catalysts typically consist of a metal (hydrogenation function) supported over an acidic support (cracking function). The most used metal functions are noble metals as Pt, Pd and Ni, or bimetallic sulphides such as Co/MoS or Ni/MoS with the usual acidic supports being alumina, amorphous silica alumina (ASA) and zeolites. The balance between the acidic and metal function is critical in the performance of the catalyst. However, it is not possible to determine the optimum balance *ab initio.* One problem with this approach is that conventional zeolite catalysts have a limited lifetime and become "spent" after a period of use. The spent catalysts are less active and this is considered to be a consequence of their reduced crystallinity relative to fresh catalysts.

Hydrocracking and pyrolysis of waste plastics have numerous drawbacks, and therefore are not presently considered to be viable methods for the disposal of waste plastics. The main problems encountered with these techniques are the high temperatures required (400 to 700° C), the long reaction times required and the variability of the quality of the product. There are also significant problems caused by the presence of polyvinyl halides (such as PVC) and PET in the waste plastics supply. The rapid dehalogenation of polyvinyl halides has dramatic consequences on a conventional pyrolysis and catalytic unit because of the production of halogenated organics and hydrogen halides. Additionally, the thermal degradation of PET produces large amounts of oligomers and terephthalic acid, which can cause damage to conventional reactors. Consequently, it is essential to pre-sort the waste stream before recycling it to remove these undesirable components. These various problems prevent continuous operation of the reactor. Conventionally, mixed waste plastics supplies must therefore first be separated to remove plastics such as PVC, e.g. by mechanical means, which in itself is a costly and time consuming process. This problem is exacerbated by the presence of PVC films on some products such as drinks bottles which makes the separation of PVC extremely difficult. Furthermore, the problem of how to dispose of plastics such as PVC still remains. An additional problem with the processing of mixed waste plastics is the variation in the resulting product streams; different waste plastics produce different product streams.

The processing of mixtures of waste plastics materials is therefore considered to be extremely problematic and, as such, catalytic hydrocracking and pyrolysis are not considered to be viable methods of disposing of plastics waste which has not been pre-sorted.

It is known that the performance of zeolite based catalysts may be improved by increasing the stability of the zeolite and by reducing the unit cell size dimension and sodium oxide (Na₂O) content of the zeolite. It is therefore an objective when providing improved zeolite based catalysts to reduce the unit cell size and Na₂O content from that of the originally synthesised zeolite catalyst to as low a value as possible. There have been several disclosures which describe the reduction of the unit cell size and Na₂O content of zeolite based catalysts. However, if this process of reducing the unit cell size and/or Na₂O content of the zeolite is performed to too great an extent, the catalyst may be deactivated. In other words, the modified catalyst may resemble a spent catalyst and/or become ineffective or have a reduced lifetime. For this reason, catalysts are treated carefully to ensure that the modification of the crystallinity, unit cell size and Na₂O content only proceeds to a limited extent.

For example, GB 2 014 970 discloses modified forms of zeolite Y which exhibit an adsorptive preference for less polar organic molecules relative to strongly polar molecules such as water. The authors of GB 2 014 970 termed these modified forms of zeolite Y 'ultrahydrophobic type Y zeolites' or 'UHP-Y zeolites'. The zeolites are first ion-exchanged and are then subjected to a steam calcination step. Briefly, the ion-exchange method comprises steam calcining zeolite Y at between 550 and 800°C for 0.25 hr; rapidly cooling to 350°C; and performing a conventional cation exchange with an ammonium salt. The ion-exchanged zeolites are disclosed to have a Na₂O content of approximately 0.25%. The ion-exchanged zeolites then undergo a further limited steam calcination process. The resulting UHP-Y zeolites are disclosed to have a unit cell dimension of 24.20 - 24.45 Å. These modified zeolites are then used as catalysts without further treatment.

GB patent 2 085 861 discloses a process for preparing an aluminium ion exchanged type Y zeolite-containing catalyst which produces high octane cracked gasoline. The process disclosed comprises: performing an ammonium ion exchange, then subjecting the zeolite to calcination at 537 - 815°C and performing an aluminium ion exchange. This process reduces both the Na₂O content and also the unit cell size of the zeolite; unit cell size values of 24.45Å are disclosed. It is also disclosed that the aluminium ion exchanged zeolite may be subjected to a further ammonium ion exchange to further reduce the Na₂O content. The aluminium ion exchange in this process replaces most of the sodium ions present in the calcined zeolite with aluminium ions.

US patent 5,059,567 also discloses a process for preparing a modified zeolite Y having increased stability and a small zeolite unit cell size; unit cell size values of 24.20Å are disclosed. The process disclosed in this document increases the stability of the zeolite and decreases the stability of the zeolite by the following process: first performing an initial ammonium ion exchange, then subjecting the zeolite to steam calcination at 500 - 900°C, optionally performing a further ammonium ion exchange, then performing an aluminium ion exchange before subjecting the zeolite to a final steam calcination at 500 - 900°C. The resulting catalyst is then used without further treatment. Importantly, it is disclosed in US patent 5,059,567 that the final unit cell size after the aluminium ion exchange and the subsequent calcination in steam was dependent on the amount of aluminium ions supplied by ion exchange. The greater the amount of aluminium ions supplied by ion exchange, the greater was the reduction of the unit cell size with unchanged calcination conditions. It is also disclosed in US patent 5,059,567 that the performance of the optional ammonium ion exchange step does not have an effect the unit cell size.

US 5 013 699 discloses catalyst bases which are prepared by hydrothermally treating an ammonium ion exchanged sodium Y zeolite followed by low pH ammonium ion exchange to produce highly crystalline zeolite catalyst base. Catalysts incorporating such zeolite catalyst bases, as well as hydrocracking and fluid catalytic cracking processes for the production of gasoline products utilizing catalysts incorporating such catalyst bases, are also described.

WO2005/094990 discloses a process of preparing a catalytic cracking catalyst comprising: mixing the following ingredients in the proportion indicated there against faujasite zeolite - 5-35 wt %; pseudoboehmite alumina - 10-40 wt %; polyammonium silicate -1-10 wt %; kaolin clay - 15-60wt %; milling said ingredients and making a slurry using water; spray drying said slurry to micro-spheres; and calcining said micro-spheres at 500°C for 1 hour to obtain the catalyst.

WO2007/068067 discloses an alumino silicate catalyst comprising counter ion Na and/or K in a sufficient amount so that when mixing 0.2g of catalyst in powder form with 20ml water having a pH of 5.56 so as to form a water/catalyst mixture, the pH of the water/catalyst mixture is higher than 4.2, and having a BET surface of 5 to 60 m²/g, said catalytic system further comprising 0.005% to 1% by weight of Ba and/or Sr.

Garforth et al, Current Opinion in Solid State and Materials Science, 8 (2004), 419-425 discloses feedstock recycling of polymer wastes by hydrocracking with hydrogen over a catalyst comprising transition metals supported on acid solids such as zeolites.

Weibing Ding et al, Energy & Fuels, 1997, 11, 1219-1224 discloses the conversion of plastics waste into transportation fuels over bifunctional catalysts, such as zeolite and silica-alumina-supported Ni and Ni-Mo sulphides.

Nathan Hess et al, Journal of Applied Polymer Science, 92 (2004), 1293-1301 discloses polyethylene catalytic cracking by PtHZSM-5, PtHY and PtHMCM-41 bifunctional solid acid catalysts.

The present invention also aims to provide novel zeolite based catalysts and methods for providing the same. The present invention satisfies at least one or more of the above aims.

The modified zeolite catalysts of the present invention are obtained from existing zeolite catalysts by a process that includes steps which ordinarily might be considered as leading to deactivation of the zeolite catalyst. In this regard the catalysts would normally be considered to be "spent" and incapable of further use.

According to a first aspect, the present invention provides a method of making a modified zeolite catalyst comprising:
(i) obtaining a commercially available zeolite Y catalyst having a Na₂O content of from 2.0 to 4.0%;
(ii) subjecting the zeolite to a two-stage ion-exchange process, wherein the first ion-exchange process comprises admixing the zeolite with an ammonium salt solution at between 50 and 85°C for between 10 and 60 minutes;
(iii) subjecting the zeolite to a second ion-exchange process, wherein the second ion-exchange process comprises admixing the zeolite with an ammonium salt solution at between 90 and 100°C for between 60 and 240 minutes;
(iv) steam calcining the zeolite from step (iii) at between 450 and 800°C for between 10 minutes and 60 minutes;
(v) subjecting the zeolite of step (iv) to an ion-exchange process, wherein the ion-exchange process comprises admixing the zeolite of step (iv) with an ammonium salt solution at between 50 and 95°C for between 10 and 120 minutes; and
(vi) subjecting the zeolite of step (v) to a transition metal ion-exchange process, wherein the ion-exchange process comprises admixing the zeolite of step (v) with a transition metal salt solution, wherein the transition metal salt solution is selected from the group comprising: Fe, Ru, Os, Co, Rh, Ir, Ni, Pd and Pt.

According to another aspect, the present invention provides a zeolite catalyst obtained by the method of the above aspect comprising: a zeolite having a sodium oxide content of 0.1% or less; and comprising a transition metal in an amount of 0.1% to 75% by weight.

In an embodiment, the zeolite of the present invention has a final unit cell dimension of 24.3 - 24.7 Å. In an embodiment, the zeolite of the present invention has a Si/AI ratio of 1.5 - 3. In an embodiment, the zeolite of the present invention has a surface area of 400 - 900 m²g⁻¹, preferably 650 - 850 m²g⁻¹. In an embodiment, the zeolite of the present invention has a crystallinity of 60 - 100%, preferably 70 - 90%.

The following table provides typical values of samples of the zeolite of the present invention:

| Sample | Na₂O content/% (Dried Bulk) | Unit cell size/Å | Crystallinity/% | Surface area/m²g⁻¹ |
|---|---|---|---|---|
| | | | | |
| B | 0.10 | 24.52 | 80 | 780 |
| C | 0.10 | 24.53 | 83 | 772 |
| D | 0.07 | 24.45 | 70 | 729 |
| E | 0.07 | 24.39 | 70 | 681 |

In an embodiment, the commercially available zeolite Y of step (i) of the method of making the zeolite catalyst has a Na₂O concentration of 2.0 to 3.5%, preferably 2.0 to 3.0% and more preferably around 2.5% (% of dried bulk).

In an embodiment, the ammonium salt solution is an aqueous solution of an ammonium salt for any one or all of step (ii), step (iii) and step (v). In an embodiment, the ammonium salt when used to ion-exchange the zeolite catalyst is independently selected from the group comprising: ammonium chloride, ammonium sulphate and ammonium nitrate. The skilled person will be aware of other ammonium salts that would be suitable in the method of the present invention. The ammonium salt used in step (ii), step (iii) and step (v) may be the same or different. Preferably, step (ii), step (iii) and step (v) use the same ammonium salt.

In general terms, step (ii) of the method of making a zeolite catalyst is a mild ammonium ion exchange. In an embodiment, step (ii) of the method of making a zeolite catalyst comprises subjecting the zeolite to a first ion-exchange process, wherein the ion-exchange process comprises admixing the zeolite with an ammonium salt solution at between 60 and 75°C and more preferably 65 and 70°C. In an embodiment, the ion-exchange process comprises admixing the zeolite with an ammonium salt solution at around 70°C.

In an embodiment, step (ii) of the method of making a zeolite catalyst comprises subjecting the zeolite to an ion-exchange process, wherein the ion-exchange process comprises admixing the zeolite with an ammonium salt solution for between 15 minutes and 50 minutes, preferably 20 minutes and 45 minutes, more preferably 25 minutes and 40 minutes and yet more preferably 30 minutes and 35 minutes. In an embodiment, the ion-exchange process comprises admixing the zeolite with an ammonium salt solution for 30 minutes.

In general terms, step (iii) of the method of making a zeolite catalyst is a severe ammonium ion exchange. In an embodiment, the ion-exchange process comprises admixing the zeolite with an ammonium salt solution at around 95°C ± 2°C.

In an embodiment, step (iii) of the method of making a zeolite catalyst comprises subjecting the zeolite to an ion-exchange process, wherein the ion-exchange process comprises admixing the zeolite with an ammonium salt solution for between 1.5 hours and 4 hours, preferably 2 hours and 3.5 hours and more preferably 2.5 hours and 3.5 hours. In an embodiment, step (iii) comprises subjecting the zeolite to an ion-exchange process, wherein the ion-exchange process comprises admixing the zeolite with an ammonium salt solution for around 3 hours.

In an embodiment, step (iv) of the method of making a zeolite catalyst comprises steam calcining the zeolite from step (iii) at between 450 and 600°C, preferably 470 and 570°C and more preferably 500 and 540°C. In an embodiment, step (iv) comprises calcining the zeolite from step (iii) at 520°C.

In an embodiment, step (iv) of the method of making a zeolite catalyst comprises steam calcining the zeolite from step (iii) at between 500 and 700°C, preferably 550 and 650°C and more preferably 580 and 620°C. In an embodiment, step (iv) comprises calcining the zeolite from step (iii) at 600°C.

In an embodiment, step (iv) of the method of making a zeolite catalyst comprises steam calcining the zeolite from step (iii) at between 600 and 800°C, preferably 650 and 750°C and more preferably 680 and 730°C. In an embodiment, step (iv) comprises calcining the zeolite from step (iii) at 710°C.

In an embodiment, step (iv) of the method of making a zeolite catalyst comprises steam calcining the zeolite from step (iii) for between 15 minutes and 50 minutes, preferably 20 minutes and 45 minutes, more preferably 25 minutes and 40 minutes and yet more preferably 30 minutes and 35 minutes. In an embodiment, step (iv) of the method comprises steam calcining the zeolite from step (iii) for 30 minutes.

In an embodiment, step (v) of the method of making a zeolite catalyst comprises subjecting the zeolite to an ion-exchange process, wherein the ion-exchange process comprises admixing the zeolite with an ammonium salt solution at between 60 and 95°C, preferably 65 and 90°C and more preferably 70 and 90°C. In an embodiment, step (v) comprises subjecting the zeolite to an ion-exchange process, wherein the ion-exchange process comprises admixing the zeolite with an ammonium salt solution at around 80°C ± 2°C.

In an embodiment, step (v) of the method of making a zeolite catalyst comprises subjecting the zeolite to an ion-exchange process, wherein the ion-exchange process comprises admixing the zeolite with an ammonium salt solution for between 20 minutes and 90 minutes, preferably 30 minutes and 90 minutes and more preferably 45 minutes and 75. In an embodiment, step (v) of the method comprises subjecting the zeolite to an ion-exchange process, wherein the ion-exchange process comprises admixing the zeolite with an ammonium salt solution for around 1 hour.

In an embodiment step (vi) comprising stirring the zeolite from step (v) in a solution of transition metal salt at around room temperature for between 1 hour and 48 hours, preferably 24 hours.

The zeolite is produced by first reducing the Na₂O level by performing a mild ion-exchange process, followed by a more severe ion-exchange process and then performing a steam calcination step. The final level of Na₂O can be tuned according to the severity of the final steam calcination step; the more severe the calcination, the lower the Na₂O content. Finally, the steam calcined zeolite is further ion-exchanged.

By way of example, the zeolite may be prepared by the following method:
(i) provide a zeolite catalyst having a Na₂O content of approximately 2.5%;
(ii) perform a mild ammonium ion-exchange (pH 8, 70°C, 30 mins). The resulting zeolite has a Na₂O content of approximately 0.57%;
(iii) perform severe ammonium ion-exchange (pH 8, 95°C, 3 hrs). The resulting zeolite has a Na₂O content of approximately 0.1%;
(iv) perform a steam calcination step: mild (520°C, 30 mins), medium (600°C, 30 mins), severe (710°C, 30 mins). The resulting zeolites have a Na₂O content of 0.1%, 0.07% and 0.07% respectively;
(v) perform a further ammonium ion-exchange (pH 8, 80°C, 1 hr). The resulting zeolite has a Na₂O content of approximately 0.1%, 0.07% and 0.07% respectively.

In an embodiment, the zeolite is produced by the method recited in the first aspect above. In an embodiment the zeolite is characterised per the preferred embodiments recited above.

The transition metal catalyst is preferably selected from the group comprising: platinum, palladium, nickel and iridium. More preferably, the transition metal is selected from the group comprising: platinum and nickel; most preferably the metal is platinum.

The quantity of metal catalyst in relation to the zeolite can vary considerably. The quality of transition metal of course depends on which transition metal catalyst is selected. For example, if the transition metal catalyst is a platinum catalyst, the amount of catalyst may be between 0.1 and 10%, and more normally is between 0.1 and 5%, preferably 1% ± 0.2%, by weight of the zeolite catalyst. Alternatively, if the transition metal catalyst is a nickel catalyst, the amount of catalyst may be between 10 and 75%, preferably 60% ± 2%, by weight of the zeolite catalyst.

The reduction in Na₂O content means that the zeolite also has a concomitant reduction in unit cell size. Thus ammonium ion exchange and calcination each independently reduce both the unit cell size and the Na₂O content. The balance of Al³⁺ in the framework versus extra framework Al³⁺ is important in controlling the overall acidity of the catalyst. The balance of this is manipulated here by using various steaming regimes.

It is known in the art that steam calcination can be used to deliberately deactivate zeolite catalysts. Thus, the zeolite catalysts resulting from the final steam calcination are similar in structure and properties to spent zeolite catalysts. However, it has surprisingly been found that by performing an additional ammonium ion exchange step, an extremely useful zeolite catalyst can be produced from waste i.e. spent catalysts: a catalyst of the present invention. Furthermore, a yet further surprising discovery is that by ion exchanging this ammonium ion exchanged catalyst with a target catalytic metal ion, an extremely useful metal loaded zeolite catalyst can be obtained.
Figure 1 illustrates an example of an autoclave setup. The following key is used:
   - V-N: = N₂ line valve
   - V-H: = H₂ line valve
   - V-G: = Autoclave gas valve
   - V-V: = Venting valve
   - V-S: = Sampling valve
   - V-OW: = One way valve
   - SC: = Gas sampling connection
   - RD: = Bursting disc
   - PI: = Pressure Gauge
   - TCI: = Temperature controller and indicator
Figure 2 illustrates an example of the catalyst activation rig used in the present invention. The following key is used:
   - VM-N: = Nitrogen metering valve
   - VM-H: = Hydrogen metering valve
   - VM-A: = Air metering valve
   - V-1: = Valve 1
   - V-2: = Valve 2
   - V-3: = Valve 3
   - V-4: = Valve 4
   - C-1: = Connection 1
   - C-2: = Connection 2
   - C-3: = Connection 3
   - V-OW: = One way valve
   - TCI: = Temperature controller and indicator
   - TI: = Thermocouple

The present invention is illustrated by way of the following examples. These examples are not intended to be limiting to the scope of the present invention.

### Example 1 - Preparation of reactor (general). This example does not fall within the scope of the claims, but is retained to demonstrate the utility of the claimed catalysts.

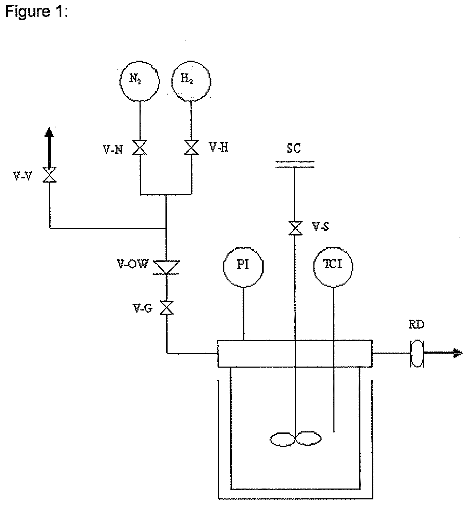

This example illustrates how the reactor is prepared prior to commencing the reaction. The example makes reference to figure 1.

The waste plastics supply, catalyst and solvent (if necessary) are loaded into a clean autoclave. A gasket with copper greased applied is then put in place. The lid of the autoclave is then tightened with bolts in order to prevent leaks to a torque of about 70 Nm. All the valves at this stage are closed.

The reactor is then purged with N₂ to remove all of the air in the system. To purge the system, the valve V-N is fully opened and the valve V-G is opened in a controlled manner to gradually increase the pressure (as indicated by the gauge). When the pressure is above 200 psig, V-G and V-N are closed and the content of the autoclave is vented in a controlled manner by opening V-V and V-G. This operation is repeated approximately three times to make sure the reactor has no air.

If the experiment is going to be under N₂, the reactor is pressurised to the desired pressure, Po, with N₂.

If H₂ is to be used, it is advisable to purge the system again with N₂ before pressurising to the desired pressure, P₀, with H₂.

The amount of gas that is initially in the reactor is measured by connecting a gas meter to the sampling exit, SC, and opening the valve V-S to circulate the gas from the autoclave through the gas meter. When gas flow stops, V-S is closed and the reactor pressurised again up to P₀. The reactor is then closed and the experiment ready to start.

### Example 2 - The reaction. This example does not fall within the scope of the claims, but is retained to demonstrate the utility of the claimed catalysts.

This example illustrates the procedure for performing the hydrocracking or pyrolysis reaction.

To start the reaction, firstly the stirrer is turned on. Then, the desired reaction temperature is set by using the temperature controller. In order to avoid the temperature overshooting, it is advisable not to set the temperature directly to the final value, but to increase the temperature in stages. When the final temperature is reached, it is held isothermal for the desired reaction time. After the reaction, the heater is switched off. During the experiment, it is important to monitor and record any changes associated with the stirrer, heater and pressure with time.

The reactor is then cooled by using compressed air and at a temperature where leaks are likely to occur, the gas contents of the reactor are sampled into a 1L bomb placed in an ice-bath. This is done by connecting the sampling bomb to the sampling exit SC. The bomb is connected to a gas meter and the gas is circulated. During this time gas sampling bags can be used to collect samples for analysis. When gas sampling is complete, when no more gas is flowing, the gas meter is disconnected and the bomb sealed.

The remaining gas in the reactor is also measured with the gas meter and samples taken for analysis. The reactor is then turned upside down to collect the liquid and solid contents which can then be weighed and collected for analysis.

This scheme illustrates an example flow diagram for both preparing the reactor and performing the reaction according to examples 1 and 2.

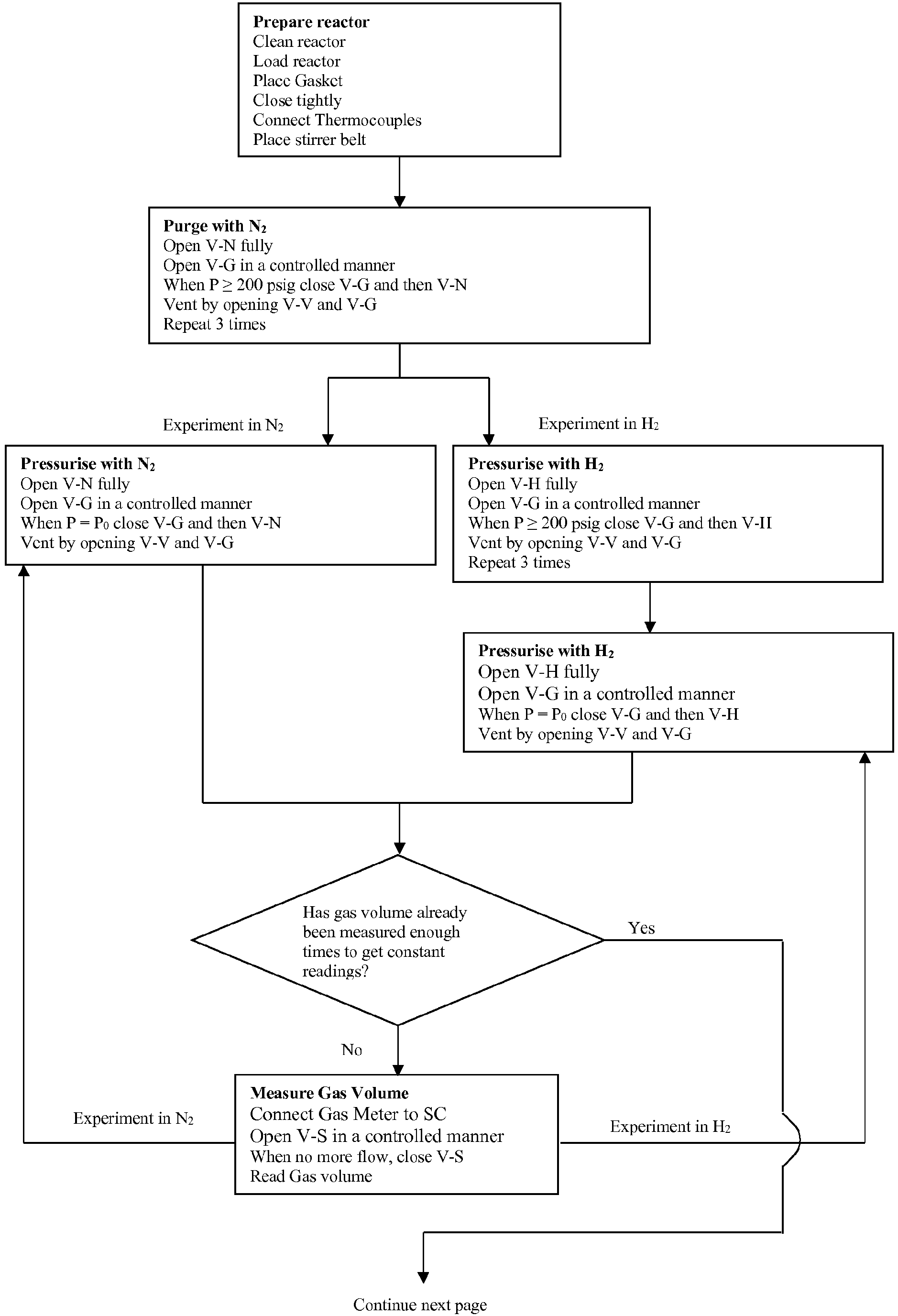

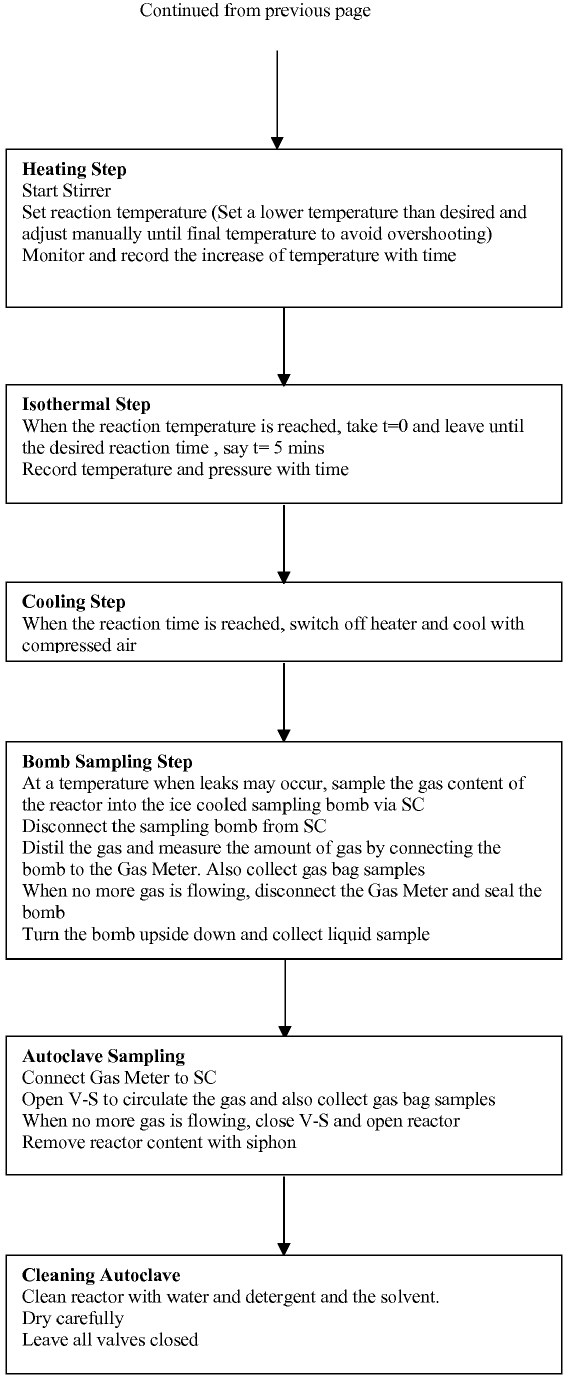

### Example 3 - preparation of the bare zeolite catalyst (excluding metal)

This example illustrates a procedure for the manufacture of three zeolite catalysts of the present invention. The Na₂O contents of the catalysts and intermediates are recited. The initial zeolite catalyst having a Na₂O content of 2.5% is commercially available.

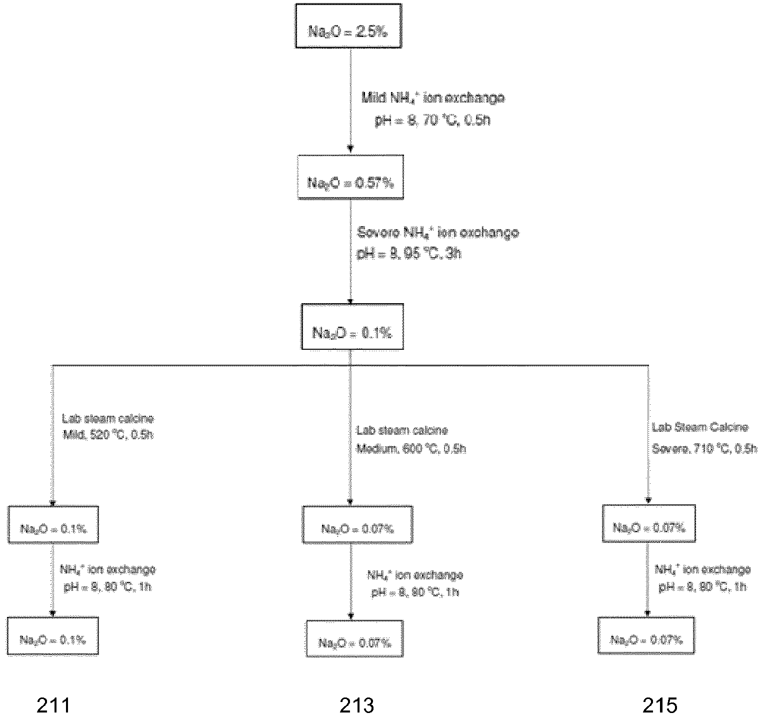

### Example 4 - loading of transition metal by ion exchange

This example illustrates the procedure for the loading of the transition metal to the zeolites produced from example 3.

The catalysts were loaded with Pt by ion exchange with an aqueous solution of Pt(NH₃)₄Cl₂ salt purchased from Sigma-Aldrich. About 10 g of zeolite was mixed with 1000 mL of 0.001 M Pt solution and the slurry was then stirred at room temperature for 24 h. The concentration of the solution was calculated from the required level of loading, assuming complete uptake of platinum by the zeolite and a ratio of 100 mL of solution per gram of zeolite exchanged. The Pt loaded zeolite was then filtered off and washed with deionised water to remove chloride ions. About 6 L of deionised water was used for each 10 g of catalyst prepared. The filtrate (supernatant solution) was retained and analysed for Pt to ensure total ion exchange of the Pt. The catalyst was then dried overnight at 110°C.

Elemental analysis of the supernatant solutions of all ion exchanges was performed by a Fisons Horizon ICP-OES (Inductively Coupled Plasma-Optical Emission Spectrometer). This analysis revealed no traces of Pt left in any supernatant, confirming the hypothesis of complete uptake.

The Pt ion exchange performed can be represented non-stoichiometrically as shown in diagram:

NH₄⁺(zeolite) + Pt(NH₃)₄²⁺(aq) → Pt(NH₃)₄(zeolite) + NH₄⁺(aq)

The ion exchange intended is not complete and some ammonium is left to provide the Brønsted acid site after calcination.

The catalysts prepared and tested are summarised in table 1. The loadings are calculated with the hypothesis (confirmed) of complete Pt uptake.

**Table 1. Example of platinum loadings (in wt %) of catalysts used**

| | 0% Pt | 0.5% Pt | 1% Pt |
|---|---|---|---|
| USY-1 | - | - | + |
| USY-2 | + | + | + |
| USY-3 | - | - | + |
| MOR | - | - | + |
| ASA | + | - | + |

| | | | |
|---|---|---|---|
| In the above table, the character '+' indicates that the catalyst is active. The character '-' indicates that the catalyst is not active. | | | |

### Example 5 - catalyst activation procedure

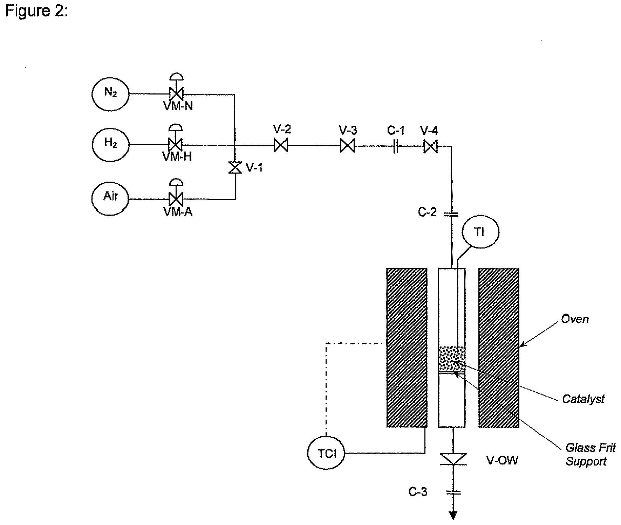

This example illustrates the procedure for the activation of the catalysts from example 4. Figure 2 is relevant to this example.

The catalysts with the tetra-ammine Pt complex adsorbed require activation to obtain the Pt metal (oxidation 0). The procedure has two steps: firstly calcination with O₂ or air (to obtain the oxidized form of the metal Pt²⁺ and the H form of the zeolite) and secondly, reduction with H₂ (to obtain the reduced Pt metal form).

It has been shown in the literature that the heating rate of the first step has to be slow in order to avoid sintering and the procedure used is shown in table 2.

**Table 2: Calcination and reduction program for Pt loaded materials**

| **Sample Weight (g)** | | 1.8 | | |
|---|---|---|---|---|
| **Gas** | **Flow (mL/min)** | **Temp (°C)** | **Time/Ramp** | **Pressure** |
| **Air** | 100 mL/min | 40-450 | 1 °C/min | Atm |
| **Air** | 100 mL/min | 450 | 240 min | Atm |
| **Air** | 100 mL/min | 450-40 | 2 °C/min | Atm |
| **N₂** | 50 mL/min | 40 | 15 min | Atm |
| **H₂** | 100 mL/min | 40-450 | 2 °C/min | Atm |
| **H₂** | 100 mL/min | 450 | 240 min | Atm |
| **H₂** | 100 mL/min | 450-40 | 2 °C/min | Atm |

Activation of these types of catalysts is usually done in-situ. Alternatively, the activation may be performed outside the reactor. A suitable apparatus for activating the catalysts outside the reactor is given in figure 2.

The activation of the Pt loaded catalyst may be carried out using the apparatus of figure 2 by following the flowchart provided in the following scheme. The valves may be calibrated by measuring flows with a bubble-meter, and so setting the positions for the desired flows.

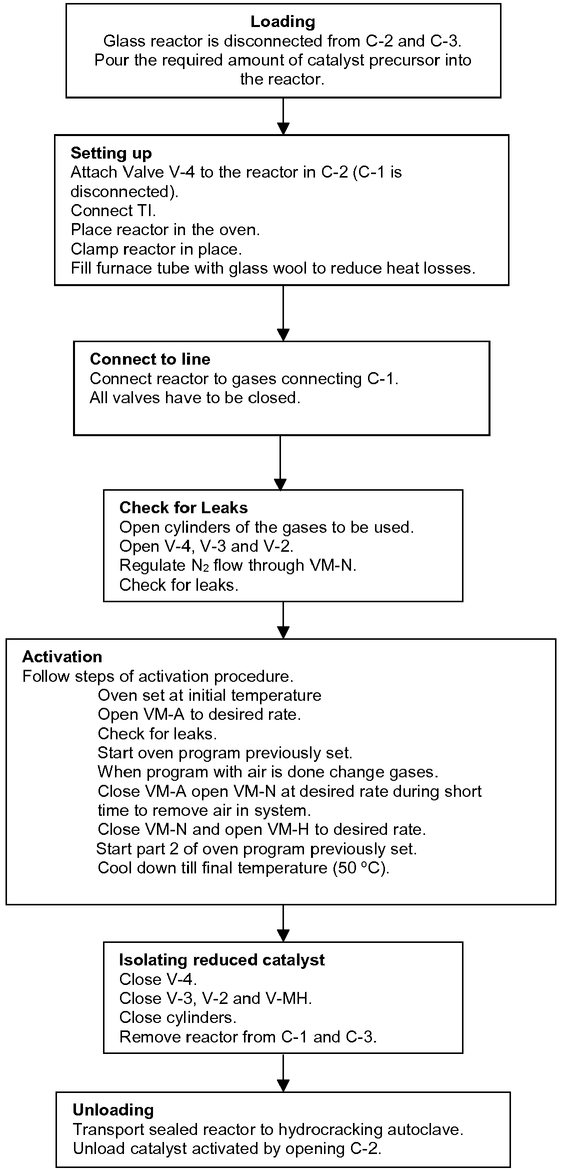

### Example 6 - Results. This example does not fall within the scope of the claims, but is retained to demonstrate the utility of the claimed catalysts.

This example illustrates the results for the catalytic hydrocracking of a number of compounds. The catalyst numbers refer to those recited in example 3 above.

| **Compound** | **Catalyst** | **T/°C** | **P/psi** | **Typical Conversion/%** |
|---|---|---|---|---|
| n-Heptane | 215 | 270 | 800 | 0.5 |
| n-Heptane | 215 | 310 | 800 | 5.8 |
| n-Heptane | 215 | 350 | 800 | 83.8 |
| n-Heptane | 215 | 380 | 800 | 96.1 |
| Squalane | 211 | 350 | 800 | 100.0 |
| PE | 215 | 310 | 800 | 99.5 |
| PP | 215 | 310 | 800 | 99.8 |
| PS | 215 | 310 | 800 | 100.0 |
| PE (40%), PP (40%), PS (20%) | 215 | 310 | 800 | 99.4 |
| PE (40%), PP (40%), PS (20%) | 211 | 310 | 800 | 99.2 |
| PE (40%), PP (40%), PS (10%), PET (10%) | 211 | 410 | 800 | 100.4 |
| PE (35%), PP (30%), PS (10%), PET (25%) | 211 | 400 | 800 | 99.8 |
| PE (40%), PP (40%), PS (15%), PVC (5%) | 211 | 350 | 800 | 99.4 |

### Example 7 - Typical Product Distribution. This example does not fall within the scope of the claims, but is retained to demonstrate the utility of the claimed catalysts.

This example illustrates the product distribution for the catalytic hydrocracking of a number of compounds. The catalyst numbers refer to those recited in example 3 above.

| | | | **Distribution of lower alkyl compounds (the number corresponds to number of carbon atoms in alkyl compound)** | | | | | | | | |
|---|---|---|---|---|---|---|---|---|---|---|---|
| **Compound** | **Catalyst** | **T/°C** | **C1** | **C2** | **C3** | **C4** | **C5** | **C6** | **C7** | **C8** | **C9+** |
| n-Heptane | 215 | 270 | 0.0 | 0.0 | 0.0 | 0.0 | 0.0 | 0.5 | 99.5 | 0.0 | 0.0 |
| n-Heptane | 215 | 310 | 0.0 | 0.0 | 1.8 | 1.8 | 1.8 | 0.5 | 95.5 | 0.0 | 0.0 |
| n-Heptane | 215 | 350 | 0.1 | 0.1 | 31.8 | 49.6 | 1.4 | 1.0 | 16.2 | 0.0 | 0.0 |
| n-Heptane | 215 | 380 | 0.1 | 0.2 | 35.1 | 58.3 | 1.6 | 0.8 | 4.0 | 0.0 | 0.0 |
| Squalane | 211 | 350 | 0.1 | 0.3 | 8.7 | 16.5 | 28.5 | 41.1 | 2.1 | 1.9 | 1.0 |
| PE | 215 | 310 | 0.0 | 0.2 | 11.2 | 32.0 | 27.5 | 17.5 | 7.9 | 2.5 | 0.7 |
| PP | 215 | 310 | 0.1 | 0.1 | 7.7 | 23.6 | 15.2 | 33.4 | 13.1 | 5.7 | 1.1 |
| PS | 215 | 310 | 0.0 | 0.1 | 29.0 | 35.5 | 3.7 | 5.1 | 15.9 | 3.8 | 7.0 |
| PE (40%), PP (40%), PS (20%) | 215 | 310 | 0.1 | 0.2 | 5.5 | 12.6 | 10.2 | 31.0 | 25.3 | 10.0 | 4.6 |
| PE (40%), PP (40%), PS (20%) | 211 | 310 | 0.0 | 0.1 | 2.6 | 7.3 | 8.5 | 30.6 | 25.9 | 15.0 | 9.3 |
| PE (40%), PP (40%), PS (10%), PET (10%) | 211 | 410 | 0.4 | 1.1 | 7.9 | 7.7 | 6.9 | 30.9 | 21.4 | 10.4 | 13.8 |
| PE (35%), PP (30%), PS (10%), PET (25%) | 211 | 400 | 0.4 | 1.2 | 5.8 | 5.6 | 5.1 | 31.4 | 18.7 | 13.3 | 18.3 |
| PE (40%), PP (40%), PS (15%), PVC (5%) | 211 | 350 | 0.1 | 0.5 | 6.8 | 8.5 | 6.9 | 29.0 | 25.5 | 12.9 | 9.2 |

## Claims

1. A method of making a modified zeolite catalyst, the method comprising:
(i) obtaining a commercially available zeolite Y catalyst having a Na₂O content of from 2.0 to 4.0%;
(ii) subjecting the zeolite to a two stage ion-exchange process, wherein the first ion-exchange process comprises admixing the zeolite with an ammonium salt solution at between 50 and 85°C for between 10 and 60 minutes;
(iii) subjecting the zeolite to a second ion-exchange process, wherein the second ion-exchange process comprises admixing the zeolite with an ammonium salt solution at between 90 and 100°C for between 60 and 240 minutes;
(iv) steam calcining the zeolite from step (iii) at between 450 and 800°C for between 10 minutes and 60 minutes;
(v) subjecting the zeolite of step (iv) to an ion-exchange process, wherein the ion-exchange process comprises admixing the zeolite of step (iv) with an ammonium salt solution at between 50 and 95°C for between 10 and 120 minutes; and
(vi) subjecting the zeolite of step (v) to a transition metal ion-exchange process, wherein the ion-exchange process comprises admixing the zeolite of step (v) with a transition metal salt solution wherein the transition metal in the transition metal salt solution is selected from the group comprising: Fe, Ru, Os, Co, Rh, Ir, Ni, Pd and Pt.

2. A method as claimed in claim 1, wherein in step (i) of the method the zeolite catalyst has a Na₂O concentration of 2.0 to 3.0%.

3. A method as claimed in claim 1 or 2, wherein the ammonium salt solution is an aqueous solution of an ammonium salt selected from the group comprising: ammonium chloride, ammonium sulphate and ammonium nitrate.

4. A method as claimed in any of claims 1 to 3, wherein step (iv) of the method of making a zeolite catalyst comprises steam calcining the zeolite from step (iii) at between 450 and 600°C.

5. A modified zeolite catalyst as obtainable by a process of any of claims 1 to 4 comprising: a zeolite having a sodium oxide content of 0.1% or less; and comprising a transition metal in an amount of 0.1% to 75% by weight.

6. A catalyst as claimed in claim 5, wherein the modified zeolite has a final unit cell dimension of 24.3 to 24.7 Å.

7. A catalyst as claimed in any of claims 5 to 6, wherein the zeolite has a surface area of 400 to 900 m²g⁻¹.

8. A catalyst as claimed in any of claims 5 to 7, wherein the zeolite has a crystallinity of 60 to 100%.

9. A catalyst as claimed in any of claims 5 to 8, wherein the zeolite has a Na₂O content of 0.05 to 0.07% by weight of the dried bulk.

## Patentansprüche

1. Verfahren zum Herstellen eines modifizierten Zeolith-Katalysators, wobei das Verfahren Folgendes beinhaltet:
(i) Erhalten eines kommerziell verfügbaren Zeolith-Y-Katalysators mit einem Na₂O-Gehalt von 2,0 bis 4,0 %;
(ii) Unterwerfen des Zeoliths einem zweistufigen Ionen-Austausch-Prozess, wobei der erste Ionen-Austausch-Prozess das Vermengen des Zeoliths mit einer Ammoniumsalzlösung bei zwischen 50 und 85 °C für zwischen 10 und 60 Minuten beinhaltet;
(iii) Unterwerfen des Zeoliths einem zweiten Ionen-Austausch-Prozess, wobei der zweite Ionen-Austausch-Prozess das Vermengen des Zeoliths mit einer Ammoniumsalzlösung bei zwischen 90 und 100 °C für zwischen 60 und 240 Minuten beinhaltet;
(iv) Dampfkalzinieren des Zeoliths von Schritt (iii) bei zwischen 450 und 800 °C für zwischen 10 Minuten und 60 Minuten;
(v) Unterwerfen des Zeoliths von Schritt (iv) einem Ionen-Austausch-Prozess, wobei der Ionen-Austausch-Prozess das Vermengen des Zeoliths von Schritt (iv) mit einer Ammoniumsalzlösung bei zwischen 50 und 95 °C für zwischen 10 und 120 Minuten beinhaltet; und
(vi) Unterwerfen des Zeoliths von Schritt (v) einem Übergangsmetall-Ionen-Austausch-Prozess, wobei der Ionen-Austausch-Prozess das Vermengen des Zeoliths von Schritt (v) mit einer Übergangsmetall-Salzlösung beinhaltet, wobei das Übergangsmetall in der Übergangsmetall-Salzlösung aus der Gruppe ausgewählt ist, die Folgendes beinhaltet: Fe, Ru, Os, Co, Rh, Ir, Ni, Pd und Pt.

2. Verfahren gemäß Anspruch 1, wobei in Schritt (i) des Verfahrens der Zeolith-Katalysator eine Na₂O-Konzentration von 2,0 bis 3,0 % aufweist.

3. Verfahren gemäß Anspruch 1 oder 2, wobei die Ammoniumsalzlösung eine wässrige Lösung eines Ammoniumsalzes ist, die aus der Gruppe ausgewählt ist, die Folgendes beinhaltet: Ammoniumchlorid, Ammoniumsulfat und Ammoniumnitrat.

4. Verfahren gemäß einem der Ansprüche 1 bis 3, wobei Schritt (iv) des Verfahrens zum Herstellen eines Zeolith-Katalysators das Dampfkalzinieren des Zeoliths von Schritt (iii) bei zwischen 450 und 600 °C beinhaltet.

5. Modifizierter Zeolith-Katalysator, wie durch einen Prozess gemäß einem der Ansprüche 1 bis 4 erhältlich, der Folgendes beinhaltet: einen Zeolith, der einen Natriumoxidgehalt von 0,1 % oder weniger aufweist; und ein Übergangsmetall in einer Menge von 0,1 Gew.-% bis 75 Gew.-%.

6. Katalysator gemäß Anspruch 5, wobei der modifizierte Zeolith eine endgültige Einheitszellenabmessung von 24,3 bis 24,7 Å aufweist.

7. Katalysator gemäß einem der Ansprüche 5 bis 6, wobei der Zeolith einen Oberflächenbereich von 400 bis 900 m²g⁻¹ aufweist.

8. Katalysator gemäß einem der Ansprüche 5 bis 7, wobei der Zeolith eine Kristallinität von 60 bis 100 % aufweist.

9. Katalysator gemäß einem der Ansprüche 5 bis 8, wobei der Zeolith einen Na₂O-Gehalt von 0,05 bis 0,07-Gew.-% der getrockneten Masse aufweist.

## Revendications

1. Méthode de fabrication d'un catalyseur à base de zéolite modifiée, la méthode comprenant :
(i) l'obtention d'un catalyseur Y à base de zéolite disponible dans le commerce ayant une teneur en Na₂O de 2,0 à 4,0 % ;
(ii) le fait de soumettre la zéolite à un procédé d'échange d'ions en deux stades, dans lequel le premier procédé d'échange d'ions comprend l'association dans un mélange de la zéolite avec une solution de sel d'ammonium à une température comprise entre 50 et 85 °C pendant une durée comprise entre 10 et 60 minutes ;
(iii) le fait de soumettre la zéolite à un deuxième procédé d'échange d'ions, dans laquelle le deuxième procédé d'échange d'ions comprend l'association dans un mélange de la zéolite avec une solution de sel d'ammonium à une température comprise entre 90 et 100 °C pendant une durée comprise entre 60 et 240 minutes ;
(iv) le fait de soumettre la zéolite de l'étape (iii) à une calcination à la vapeur à une température comprise entre 450 et 800 °C pendant une durée comprise entre 10 minutes et 60 minutes ;
(v) le fait de soumettre la zéolite de l'étape (iv) à un procédé d'échange d'ions, dans laquelle le procédé d'échange d'ions comprend l'association dans un mélange de la zéolite de l'étape (iv) avec une solution de sel d'ammonium à une température comprise entre 50 et 95 °C pendant une durée comprise entre 10 et 120 minutes ; et
(vi) le fait de soumettre la zéolite de l'étape (v) à un procédé d'échange d'ions de métal transition, dans lequel le procédé d'échange d'ions comprend l'association dans un mélange de la zéolite de l'étape (v) avec une solution de sel de métal de transition dans laquelle le métal de transition dans la solution de sel de métal de transition est sélectionné parmi le groupe comprenant : Fe, Ru, Os, Co, Rh, Ir, Ni, Pd et Pt.

2. Méthode selon la revendication 1, dans laquelle dans l'étape (i) de la méthode le catalyseur à base de zéolite a une concentration de Na₂O de 2,0 à 3,0 %.

3. Méthode selon la revendication 1 ou 2, dans laquelle la solution de sel d'ammonium est une solution aqueuse d'un sel d'ammonium sélectionné parmi le groupe comprenant : un chlorure d'ammonium, un sulfate d'ammonium et un nitrate d'ammonium.

4. Méthode selon l'une quelconque des revendications 1 à 3, dans laquelle l'étape (iv) de la méthode de fabrication d'un catalyseur à base de zéolite comprend la calcination à la vapeur de la zéolite de l'étape (iii) à une température comprise entre 450 et 600 °C.

5. Catalyseur à base de zéolite modifiée comme il peut être obtenu par un procédé selon l'une quelconque des revendications 1 à 4 comprenant : une zéolite ayant une teneur en oxyde de sodium de 0,1 % ou moins ; et comprenant un métal de transition dans une quantité de 0,1 % à 75 % en poids.

6. Catalyseur selon la revendication 5, dans lequel la zéolite modifiée a une dimension de cellule unitaire finale de 24,3 à 24,7 Å.

7. Catalyseur selon l'une quelconque des revendications 5 à 6, dans lequel la zéolite a une superficie de 400 à 900 m²g⁻¹.

8. Catalyseur selon l'une quelconque des revendications 5 à 7, dans lequel la zéolite a une cristallinité de 60 à 100 %.

9. Catalyseur selon l'une quelconque des revendications 5 à 8, dans lequel la zéolite a une teneur en Na₂O de 0,05 à 0,07 % en poids du matériau en vrac séché.
